Europäisches Patentamt

European Patent Office

Office européen des brevets

(19)

(11) Publication number: **0 246 374**
A1

(12) **EUROPEAN PATENT APPLICATION**

(21) Application number: **86303921.0**

(22) Date of filing: **23.05.86**

(51) Int. Cl.³: **G 06 K 19/06**
G 06 K 7/08, H 04 B 5/00

(43) Date of publication of application:
25.11.87 Bulletin 87/48

(84) Designated Contracting States:
DE FR NL SE

(71) Applicant: Ward, William
11 Wellfield Avenue
London N10 2EA(GB)

(84) Designated Contracting States:

(71) Applicant: Halpern, John W.
22 Northern Drive No. 3
Troy, N.Y. 12182(US)

(84) Designated Contracting States:

(72) Inventor: Ward, William
11 Wellfield Avenue
London N10 2EA(GB)

(72) Inventor: Halpern, John W.
22 Northern Drive No. 3
Troy, N.Y. 12182(US)

(54) Proximity data transfer devices.

(57) The invention relates to detail technical means for transferring the following four signal elements by proximity between an electronic memory card and a transaction terminal:
(a) a flow of data from a terminal to the card
(b) a flow of data from a card to a terminal
(c) a flow of energy from a terminal into a card during use
(d) a time or reset reference signal supplied by the terminal to the card

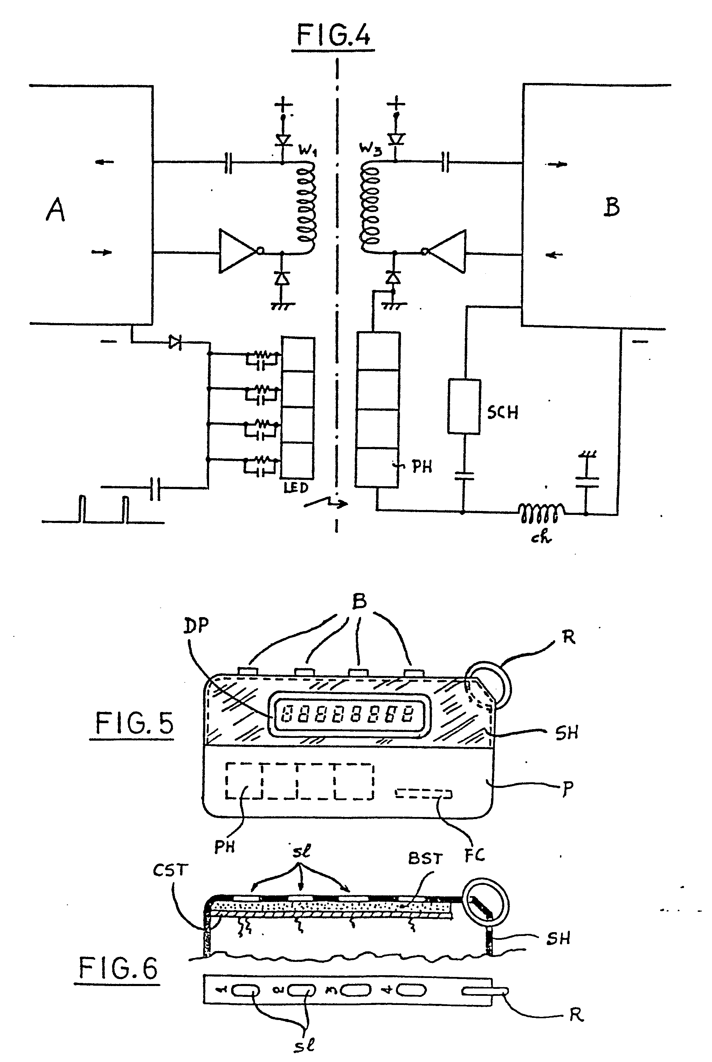

In one execution, a, b and d are represented by timing pulses whose shape varies from saw tooth to rectangular when a logic '0' is followed by a logic '1' while power is injected acoustically. In another execution, reactively coupled coils convey data in both directions whereas energy and timing pulses are transmitted photoelectrically. In still another execution, the coils are replaced by piezo-electric emitter/receiver elements. Finally, an example of the physical embodiment is given (in figs. 5 and 6) showing the possible layout of a card having infrared energy receivers (PH) and a coil core (FC) for the data transfer, a display window (DP) and data entry buttons accessible through slots in a protective shell (SH).

FIG. 5

FIG.6

PROXIMITY DATA TRANSFER DEVICES

This is a continuation of my British/patent application ser. no.
06/ 548 013      which deals with the problem of producing
a bi-directional data flow between a card ( also referred to
as a pocket-size data carrier or token ) without physical
contact. The same paper also prescribes a principle for
synchronous operation of a Reader ( read/write ) unit with
an electronic processor within the card without increasing
the number of transfer channels; it consists in retaining
a feature common to both a "1" logic bit and an "0" logic
bit which feature would represent a timing (clocking) signal.
Moreover, that clocking signal is also utilized for an injection
of energy into the card during an transaction cycle. A data
transfer in the opposite direction, from the card to the Reader,
was proposed to be achieved by using the serial sequence of
data bits for modifying the current load in the card for
one logic level, the other level remaining for example open
circuit load. The reflected impedance changes in the Reader
can then be detected as an identical serial sequence of data.

This method has been practically tested and found workable.
However, this method does not allow large variations in the
gap between card and reader. I shall now describe a modification wherein the method of transfer from the Reader to the
card or token remains unaltered, but in the reverse direction
the  data are represented by burst of oscillations timed to
coincide with a currentless condition between two clock pulses. It is expected that this version will permit substantially larger air gaps.
I shall also describe a reactive proximity link for data
in both directions which is not used to power the token
and therefore can be fairly simple; instead,the power and
timing pulses are conveyed to the token by a source of
light, and the token has built-in photo-voltaic cells.
The clock pulses are represented by short pulses of extra
intensity radiation from said light source. These light
pulses would not be required if the data transmission occurs
in the traditional asynchronous manner.

Still another way of transmitting energy from the reader to
the token is described, namely by means of magnetostriction
excitation radiating ultra-sonic power to the token when inserted into the reader, and impinging on a piezo-electric
platelet. The clocking frequency, for example 100 kHz, may
be used as the source of precise clock pulses within the token.
Finally, an example is given where piezo-electric elements
mediate the transfer of data whereas power is injected by a
light source via a photo-voltaic cell in the token.

These various proximity data transfer devices will be described
in greater detail with the aid of drawing in which

Figure 1 shows a circuit for the modified purely inductive
bi-directional data transfer

Figure 2 shows voltage curves in different parts of the circuit

Figure 3 the same, for transmission from token to reader

Figure 4 shows a combination in which energy is transferred
by a light source, optionally also the timing pulses.

Figure 5 shows an electronic data token using the circuit of
figure 4

Figure 6 shows a detail of a data token having its selector
button system recessed behind a protecting shell

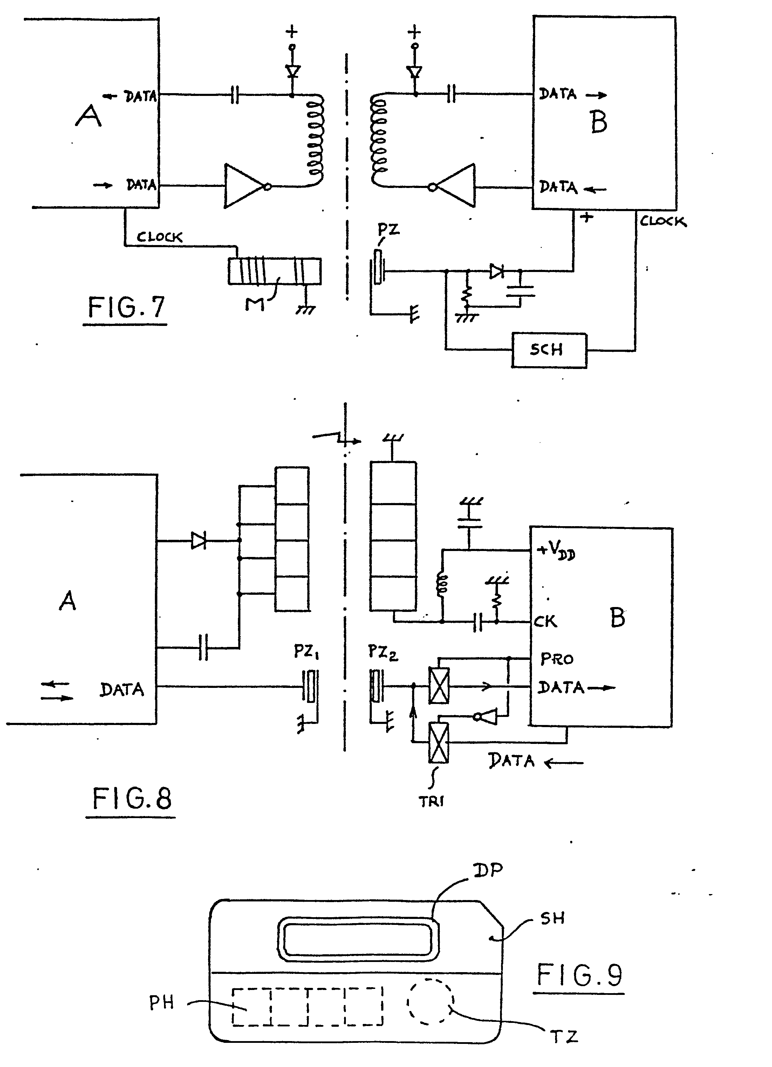

Figure 7 shows the basic arrangement in which the bi-directional reactive channel is supplemented by a generator of high-frequency ultrasonic waves for injection
of power into the token also used for synchronous
timing of all token processing

Figure 8 shows a combination wherein light is again the source
of energy whereas the data in both directions are
exchanged by means of piezo-electrically induced,
and detected respectively, wave fronts.

Figure 9 is a token plate wherein the photovoltaic elements
as well as the piezo-electric send/receiver are embedded
in molded plastic material.

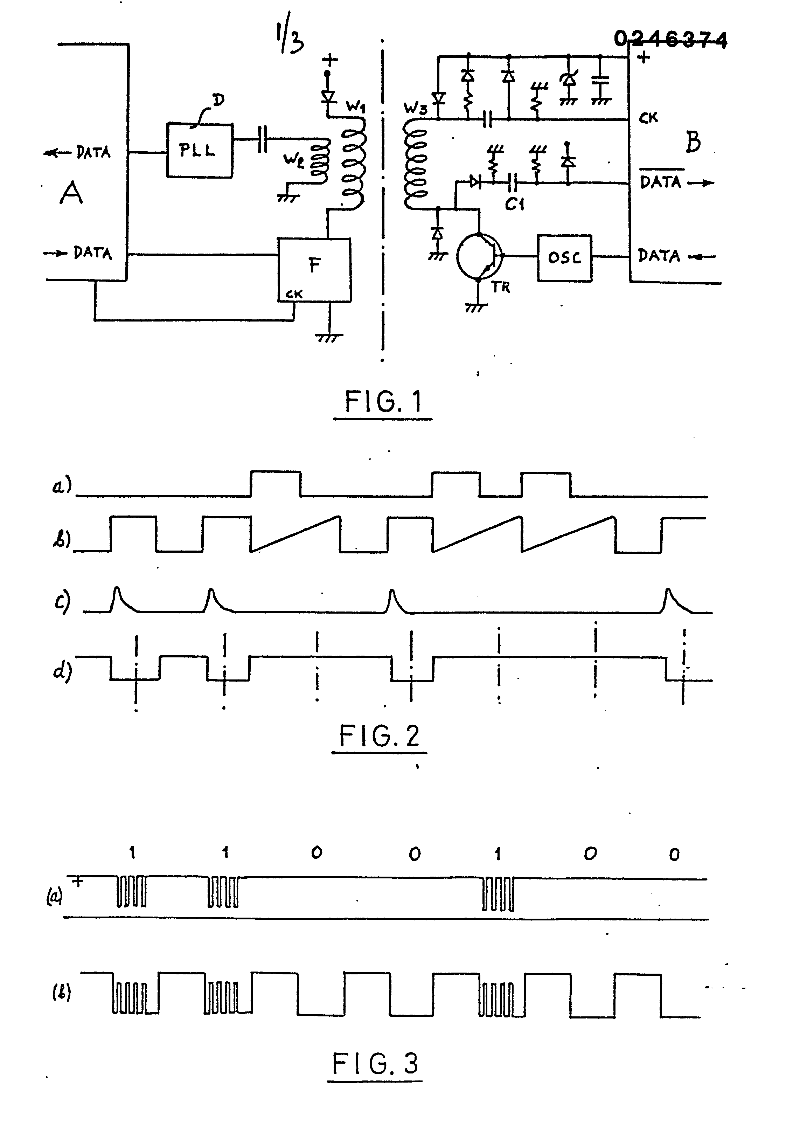

In fig. 1 on the left, A is the reader electronics, B on the
right is the token electronics, for example such as has been
described in my patent application ser. no.
The reader has two windings on the same core, $w_1$ and $w_2$.
Clockpulses CK and data-out are applied to a circuit FG (function
generator) which in turn is connected to the lower end of coil $w_1$.
The upper end of said coil is connected to a diode and a d.c.
pole (+). The second winding $w_2$ is connected to a frequency-
or phase detector circuit PLL whose output is a d.c. logic level.
The token coil $w_3$ produces at its upper end two outputs, namely
a build-up of voltage stabilized by zener diode z and applied to
the token processor B as $V_{DD}$ ; then, via capacitor C , the clock
pulses. The lower end of coil $w_3$ is connected via diode $d_5$ to a
differentiator which develops spikes for each zero data bit
transmitted from the reader unit but remains free from a spike
for each "1" data bit. Finally, the lower end of coil $w_3$ is
connected to the collector of a transistor Tr whose emitter goes
to ground and whose base is connected to an oscillator OSC.

When data are transmitted from the token circuit A to the
reader circuit B, the reader sends a continuous train of
clock pulses as shown in figure 3-b to the token. On the
other hand, the token generates serially data bit levels
at the input of the oscillator OSC thus producing at the
base of transistor TR bursts in the megacycle ranges making
the transistor conductive in the same rythm. These data bursts
are thus inductively transferred to coils $w_1$ and $w_2$. No
current (except a very small capacitive current) will flow
in coil $w_1$ as it is blocked at both ends. However, in coil $w_3$
the oscillation bursts are applied to the input of a detector, for example a crystal controlled phase locked loop PLL
which will respond only if the genuine data signal is present.
It will thus pass on a data pulse to the input of the reader
circuit "A". Figure 3b shows the relative positions of the
data pulses to the clock pulses. Fig. 3a shows the voltage
level changes at the collector of the transistor in the token.

When in the total program cycle data have to be transferred
from the reader to the token, a "1" data bit going out from
the reader circuit ( fig. 2 a and b ) causes the function
generator F to convert the ordinary clock pulse into a
saw tooth form. As a consequence the rising edge of the pulse
disappears and does no longer induce in the capacitor $C_1$
a spike ( see fig 2c ). The token circuit "B" contains a latch
responsive to a spike so that the $\bar{Q}$ output goes low which
is subsequently strobed. Equally, of there is no spike, the
$\bar{Q}$ output of the latch remains high which is again strobed.
In this way the data sent by the reader are reliably reproduced
in the token. The strobing times are indicated in fig. 2-d.
The rest of the circuit is fairly obvious from the diagram.

If the token circuit "B" uses electrically alterable
memory technology, no battery is needed which may be considered
an advantage. In that case, however, one looses the benefit
of doing a certain amount of processing by means of push
buttons mounted on the token. For example to write into
it a personal identifying number, or to call forth the display of selectable portions of the memory. This can be made
good by fitting into the token or card photo-voltaic cells
which on illumination generate a supply voltage. Such cells
can be seen in Figure 4, ( PH ). In this example, the
reader unit itself is equipped with a source of radiation LED
which may be made up of light emitting diodes.

It would also be possible to modulate the steady light of these elements with repetitive pulses corresponding to the desired clock pulse frequency which would be converted via a pulse shape element SCH into synchronising pulses applied to the token circuit "B". The d.c. power may be applied via a small choke ch.

The bidirectional data transfer can now be accomplished by a simplified symetrical arrangement as shown via coils $w_1$ and $w_3$.

Figure 5 shows the detail arrangement with P being a plastic molded plate transparent for the wave length of the LED selected. PH are the below the surface embedded photo-voltaic cells. FC is, for example, a ferrite core for the coil $w_3$, also embedded below the opaque surface.. A metal shell SH, flash with the plastic surface in this example, has along its top edge a few push buttons allowing them to protrude (B). A display window DP permits the digital readout of certain memory sections such as described in other patent applications of the author.

Figure 6 shows an important modification of the way the push buttons are arranged. Instead of individual buttons a button strip BST is used which is available off the shelf and contains insulating and conductive expanded rubber parts. The conductive part may be pressed against a contactor strip CST through one of the holes sl using a key or pen to operate either button 1,2,3 or 4 (see top view ). A strong steel ring R hinged into the metal shell SH can be used for hinging the token into a key ring. Conveniently, one of the keys on the key ring may also be used for operating the recessed buttons.

Figure 7 shows, besides the familiar coil coupling arrangement, also a magnetostrictive core M having a high natural frequency. When excited, it emits energy through the air gap to the token where it is received by a piezo-electric element PZ. Again, the output is divided into a d.c. rectified component for powering circuit "B", and a shaped pulse after passing through a shaper SCH.

Finally, an LED and photovoltaic cell combination may be used for power and synchronising pulses, as in figure 4, with the data transfer in both directions being performed by ceramic or other piezo electric senders/receivers $PZ_1$ and $PZ_2$. Whether these elements are used in the one or the other mode would be controlled by the program residing in both circuit "A" and "B" via tristate switches TRI (not shown for the reader side ). See figure 8. Fig. 9 gives a view of this arrangement.

CLAIMS

1. A proximity data transfer device and a pocket-size data carrier, through proximity enabled to communicate with each other in accordance with principles of synchronous or asynchronous data transmission, in w h i c h the data transfer device has a function generator circuit for converting at least one of the data levels in a data stream to be sent to the pocket-size carrier into a pulse form with a distinguishing characteristic different from the characteristic for the other logic level, and means in the portable pocketsize data carrier receiving these signals for resolving those different characteristics into the original data levels, and furthermore means in the said data carrier for representing a logic high in the data stream to be sent to the said data transfer device by a burst of oscillation of a frequency higher than that of the bits in the data stream, and means in the data transfer device to receive selectively such oscillation burst and to convert it into a logic level data bit for processing in the device processor circuit.

2. A data transfer device and a portable pocketsize data carrier as in claim 1 wherein the by the function generator produced pulse form/has at least one feature common to both the binary data bits which common feature is used for deriving a timing or clock pulse for synchronising the processor in the pocket-size data carrier.

3. A data transfer device and a pocket-size data carrier, by proximity enabled to communicate with each other in accordance with principles of synchronous or asynchronous data transmission, in w h i c h the bidirectional data transfer is performed by a single reactive coupling channel, and wherein the data transfer device incorporates a light source, and the pocketsize carrier a photo-voltaic cell for the conversion of radiation energy into electric power.

4. A data transfer device and a pocket-size data carrier as in claim 3 w h e r e i n the radiation source is caused to emit strobing pulses of higher radiation intensity.

5. A data transfer device and a pocket-size data carrier, as in claims 3 or 4 w h e r e i n the data carrying component includes a memory device and a digital display as well as push buttons for selecting a connection between a particular section of the said memory and the said display.

6. A data transfer device and a pocket-size data carrying component, by proximity enabled to communicate with each other in accordance with principles of synchronous or asynchronous data communication, w h e r e i n the power required by the data component during a transaction is provided in the manner defined in Claim 3, and both the said data transfer device and the said pocketsize data carrying component are fitted with ultrasonic piezo-electric vibrator/ detector elements and electronic switches are connected with them by means of which the programming control circuits determine the operating mode of said piezo-electric elements.

7. A data transfer device and a pocket-size data carrier, in proximity enabled to communicate with each other in accordance with the principles of synchronous or asynchronous communication, w h e r e i n the bidirectional data transfer uses a single reactive coupling channel as in Claim 3, and the data transfer device is equipped with an emitter of ultra-sonic energy, and the pocket-size data carrier with a piezo-electric pressure sensitive element capable of being excited at the frequency of the ultrasonic emission, for use as a source of d.c. power for the pocket-sized carrier.

8. A data transfer device and a pocket-size data carrier as in Claim 7, w h e r e i n the frequency of the ultra-sonic energy source also determines the data rate of the synchronous communication with said pocketsize data carrier.

9. A data transfer device and a pocket-size data carrier, in mutual proximity enabled to communicate with each other in accordance with synchronous or asynchronous communication principles, w h e r e i n the pocketsize carrier contains within the interior of a molded plastic disc a micro-electric circuit including an electrically alterable memory, a ferrite core for an inductive element, and one or more photo-voltaic cells submerged below the surface of the disc, and a metal shell covering at least a portion of the disc with holes for push buttons along one edge of the data carrier and a ring hooked into the shell at one corner for filing into it a key ring, carrying string, or the like.

10. A data transfer device and a pocketsize data carrier as in claim 9, w h e r e i n the shell has elongated slots and the said push buttons are replaced by pressure-operated switch elements placed in the interior below the said slots so that accidental or inadvertent operation of these selector elements is prevented.

FIG. 1

FIG. 2

FIG. 3

## FIG.4

## FIG.5

## FIG.6

FIG.7

FIG.8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 009 291 (HALPERN et al.) * Page 1, line 13 - page 6, line 15; page 14, line 25 - page 16, line 3; figures 9-12 * | 1-3,5 | G 06 K 19/06<br>G 06 K 7/08<br>H 04 B 5/00 |
| Y | EP-A-0 131 732 (ROCKWELL INTERNATIONAL) * Figures 4,5; page 40, lines 14-20 * | 1,2 | |
| Y,A | EP-A-0 168 836 (OKI ELECTRIC INDUSTRY) * Figures 1-3; page 4, line 19 - page 7, line 14 * | 3,5,6 9,10 | |
| Y | DE-A-3 340 469 (G. DORN) * Figure 1; page 4, line 11 - page 5, line 5 * | 6 | **TECHNICAL FIELDS SEARCHED (Int Cl 4)** |
| Y | EP-A-0 058 029 (HALPERN et al.) * Claims 7-14; figures 4-7 * | 9,10 | G 06 K<br>G 07 C<br>H 04 B |
| A | | 1 | |
| A | DE-A-2 909 899 (PHILIPP) * Page 5, line 30 - page 7, last line; page 11, lines 29-32; figures 1-4 * | 1-6 | |

---  -/-

The present search report has been drawn up for all claims

| Place of search | Date of completion of the search | Examiner |
|---|---|---|
| THE HAGUE | 28-01-1987 | GYSEN L.A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

0246374

**European Patent Office**

**EUROPEAN SEARCH REPORT**

Application number

EP 86 30 3921

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl 4) |
| A | EP-A-0 057 602 (CHALMERS et al.)<br>* Figures 1,2; page 1, line 1 - page 3, line 35 * | 1,9,10 | |
| X | DE-A-2 447 441 (FRAUNHOFER-GESELLSCHAFT ZUR FÖRDERUNG DER ANGEWANDTEN FORSCHUNG E.V.))<br>* Figure 2; page 2, line 3 - page 3, line 1 * | 3 | |
| E | GB-A-2 167 586 (HALPERN et al.)<br>* Whole document * | 1-10 | |
| X | PATENTS ABSTRACTS OF JAPAN, vol. 7, no. 278 (P-242)[1423], 10th December 1983; & JP-A-58 154 081 (ARIMURA GIKEN K.K.) 13-09-1983 | 7 | TECHNICAL FIELDS SEARCHED (Int. Cl.4) |

The present search report has been drawn up for all claims

| Place of search | Date of completion of the search | Examiner |
|---|---|---|
| THE HAGUE | 28-01-1987 | GYSEN L.A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82